# EUROPÄISCHE PATENTSCHRIFT

(11) **EP 0 362 532 B1**
(45) Veröffentlichungstag und Bekanntmachung des Hinweises auf die Patenterteilung: **18.11.1993**
(21) Anmeldenummer: 89115372.8
(22) Anmeldetag: 21.08.1989
(51) Int. Cl.: H01C 17/06

(54) **Widerstandspaste und aus ihr hergestellte Widerstandsschicht**
Resistance paste and resistive layer made from same
Pâte résistive et couche résistive fabriquée avec elle

(30) Priorität: 03.10.1988 DE 3833555
(43) Veröffentlichungstag der Anmeldung: 11.04.1990
(73) Patentinhaber: Preh-Werke GmbH & Co. KG, 97616 Bad Neustadt (DE)
(72) Erfinder: Ambros, Peter, Dipl.-Chem., D-8741 Leutershausen (DE); Berger, Kurt, D-8733 Steinach (DE)

(56) Entgegenhaltungen:
- DE-A- 2 107 424
- DE-A- 2 834 390
- US-A- 2 825 702

## Beschreibung

Die Erfindung betrifft eine Widerstandspaste aus polymerem Bindemittel mit eindispergierten, elektrisch leitfähigen Partikeln, Lösungsmitteln und Additiven. Die Erfindung betrifft weiterhin eine aus einer solchen Widerstandspaste hergestellte Widerstandsschicht.

Es sind Polymer-Dickfilm-Widerstandspasten bekannt, deren Bindemittel ein thermoplastisches Polymer ist (vgl. Literaturstelle: iee productronic, 29. Jahrgang, 1984, Nr. 1/2, Seiten 35/36). Gedruckte Schichten aus einer solchen Widerstandspaste lassen sich bei niedrigen Temperaturen aushärten. Der Widerstandswert ist jedoch beim Einwirken von Temperaturen über 80°C nicht mehr stabil. Der Widerstandswert nimmt mit ansteigender Temperatur zu, bis die elektrische Leitfähigkeit der Schicht wegen des Schmelzens des Bindemittels unterbrochen ist. Solche Schichten sind für eine Verarbeitung z.B. im Umkehrlaminierverfahren (vgl. DE-OS 33 22 382) ungeeignet, da die zum Umlaminieren der Schicht von einem Zwischenträger auf ein endgültiges Substrat nötige Wärme- und Druckentwicklung den thermoplastischen Bindemittelanteil erweicht und die Schicht verschmiert.

Es sind auch Widerstandsmassen mit einer duroplastischen Bindemittel-Komponente bekannt (vgl. iee productronic, 29. Jahrgang, 1984, Nr. 1/2, Seiten 35,36). Bei diesen nimmt der Widerstandswert mit steigender Aushärtetemperatur bzw. Aushärtedauer ab, bis bei einer zu hohen Wärmeeinwirkung die bindende Komponente der Schicht durch eine thermische Zersetzung zerstört wird. Die elektrische Stabilität solcher Widerstandsschichten ist zwar besser als die von thermoplatischen Widerstandsschichten. Nachteilig ist jedoch die hierfür erforderliche hohe Aushärtetemperatur zwischen 180°C und 230°C; denn durch die hohe Aushärtetemperatur bedingt sind die möglichen Substrate, auf die die Schicht aufzubringen ist, beschränkt.

In der DE-OS 21 07 424 ist eine Schicht beschrieben, die Phenolharz und Melaminharz aufweist.

In der DE-PS 31 48 680 ist ein Bindemittel mit den Bestandteilen Melaminharz, Alkydharz und Epoxydharz beschrieben. Die Lebensdauer der daraus hergestellten Widerstandsschicht ist durch eine Beimischung eines Vinylchlorid-Copolymerisats verlängert. Dieses Vinylchlorid-Copolymerisat erniedrigt den Reibungskoeffizienten der Widerstandsschicht, so daß sie durch Schleifbewegungen eines Abgriffs der Widerstandsschicht nur schwach beansprucht wird.

Aus DE-A-28 34 390 sind Kunststoff-Formmassen für Widerstandselemente bekannt, die im Bindemittel als Duroplaste Melaminharz und Polyester enthalten.

Es hat sich gezeigt, daß Widerstandsschichten aus den bekannten Widerstandspasten gegenüber verschiedenen organischen Substanzen, wie Kraftstoffen oder Ölen, nicht resistent sind. In solchen Einsatzfällen müßten die Widerstände durch aufwendige Dichtmittel geschützt werden.

Aufgabe der Erfindung ist es, eine Widerstandspaste der eingangs genannten Art vorzuschlagen, die über eine lange Zeit ihre Verarbeitungskonsistenz behält und mit der eine Widerstandsschicht herstellbar ist, die im Temperaturbereich zwischen -55°C und +160°C als Fest- oder Stellwiderstand elektrisch stabil und widerstandsfähig gegen organische Substanzen, wie Dieselkraftstoff, Benzin, Hydrauliköl o.ä., ist.

Erfindungsgemäß ist obige Aufgabe bei einer Widerstandspaste der eingangs genannten Art dadurch gelöst, daß 50 - 100% des Feststoffanteiles des polymeren Bindemittels bestehen aus einer Mischung von:
a) vollverethertem Melaminharz,
b) hydroxylgruppenhaltigem Polyesterharz
   und
c) einem sauren, Protonen freisetzenden Katalysator.

Durch den Anteil des Melaminharzes wird die gewünschte Stabilität im Temperaturbereich zwischen -55°C und +160°C gewährleistet. Dadurch, daß vollständig verethertes Melaminharz verwendet wird, ist erreicht, daß der Melaminharzanteil nicht bereits durch Temperatureinwirkung allein, sondern nur unter dem zusätzlichen Einfluß des Katalysators, der ein saurer, d.h. Protonen freisetzender, Katalysator ist, vernetzt und somit aushärtet. Der Katalysator ist beispielsweise von einer organischen Sulfonsäure gebildet.

Der Polyesterharzanteil der Mischung bestimmt die Härte bzw. die Plastizität der Schicht. Bei einer Anwendung der Widerstandsschicht als Stellwiderstand ist eine gewisse Plastizität erwünscht. Die Hydroxylgruppen des Polyesterharzes sind für die Vernetzung des Polyesterharzes mit dem Melaminharz erforderlich. Das Melaminharz in Verbindung mit dem Polyesterharz macht die Widerstandsschicht gegen organische Substanzen, wie Kraftstoffe oder Öle, resistent.

In bevorzugter Ausgestaltung der Erfindung ist der saure, Protonen freisetzende Katalysator ein nichtionogen blockierter Katalysator. Dieser gibt erst ab etwa 110°C seine sauren Gruppen frei, die die Vernetzung des veretherten Melaminharzes initiieren. Bei niedrigeren Temperaturen als 110°C ist der Katalysator wegen der Blockierung weitestgehend pH-neutral. Die Vernetzung des Melaminharzes setzt bei solchen Temperaturen also noch nicht ein. Dies ist für die Verarbeitbarkeit der Widerstandspaste besonders günstig. Denn dadurch bleibt die hergestellte Widerstandspaste über einen langen Zeitraum in einem verarbeitbaren Zustand. Es hat sich bei Zimmertemperatur eine Lagerfähigkeit der angemachten Widerstandspaste von einem halben Jahr und bei einer Lagerung bei +4°C eine Verarbeitbarkeit von mehreren Jahren ergeben. Der blockierte Katalysator wird üblicherweise bereits bei der Erstellung der Widerstandspaste zugesetzt, wogegen ein nicht blockierter Katalysator in der Regel unmittelbar vor der Verarbeitung der Widerstandspaste dieser beigemengt wird.

Die Widerstandspaste enthält in an sich bekannter Weise als in das Bindemittel eindispergierte, leitfähige Partikel Ruß, Graphit oder mit pyrolytischem Kohlenstoff umhüllte feuerfeste Partikel. In bevorzugter Ausgestaltung der Erfindung weisen die elektrisch leitfähigen Partikel einen pH-Wert zwischen 6,5 bis 8 auf. Es ist dadurch gewährleistet, daß die Vernetzungsreaktion nicht bereits vor der Verarbeitung der Widerstandspaste initiiert wird und dadurch die Verarbeitungskonsistenz eventuell negativ beeinträchtigt.

In einer Weiterbildung der Erfindung enthält die Mischung ein modifiziertes Esterimidharz. Durch dieses ist die Siebdruckfähigkeit der Widerstandspaste verbessert. Der Feststoffanteil des polymeren Bindemittels kann bis zu 50% aus modifiziertem Esterimidharz bestehen. Dies verbessert die Fließeigenschaften der Widerstandspaste so, daß auch im Siebdruckverfahren eine für Stellwiderstände hinreichend glatte Oberfläche der Widerstandsschicht erreicht wird.

Um die Widerstandsschicht auch gegen weitere Stoffe, wie beispielsweise Alkohole, chemisch resistent zu machen, enthält das Bindemittel außer den genannten Mischungen in weiterer Ausgestaltung der Erfindung wärmehärtbares Epoxyharz und/oder Polyurethanharz und/oder Polyacetalharz.

Mit der beschriebenen Widerstandspaste läßt sich eine Widerstandsschicht z.B. im Umkehrlaminierverfahren herstellen. Es wird dabei eine Dickschicht aus der Widerstandspaste auf einen Zwischenträger aufgebracht und bei einer Temperatur von etwa 230°C ausgehärtet. Danach erfolgt ein Umlaminieren auf das endgültige Substrat, das aus Polyester oder Epoxyd besteht.

Es ist jedoch auch möglich, die Widerstandspaste als Dickschicht direkt auf ein Foliensubstrat, beispielsweise im Siebdruckverfahren, aufzubringen und die Dickschicht bei einer Temperatur von etwa 130°C, beispielsweise über 12 h auszuhärten.

Eine aus der beschriebenen Widerstandspaste hergestellte Widerstandsschicht zeichnet sich dadurch aus, daß ihr Bindemittel wenigstens zur Hälfte aus Melaminharz und Polyesterharz besteht und bis zu 50% Esterimidharze enthalten kann.

Ausführungsbeispiele der Erfindung ergeben sich aus der folgenden Beschreibung.

Es wurde eine Widerstandspaste aus folgenden Bestandteilen angemischt:
30 Gewichtsanteile gelöstes Epoxydharz in 50%iger Lösung,
40 Gewichtsanteile gelöstes, vollverethertes Melaminharz in 98%iger Lösung,
40 Gewichtsanteile gelöstes hydroxylgruppenhaltiges Polyesterharz in 50%iger Lösung,
2 Gewichtsanteile Graphit,
8 Gewichtsanteile Ruß,
5 Gewichtsanteile Butylglykol,
4 Gewichtsanteile Katalysator,
2 Gewichtsanteile Verlaufmittel.

Dabei stehen die Feststoffanteile des Melaminharzes, des Polyesterharzes und des Katalysators im Verhältnis von etwa 39 : 20 : 4. Diese Widerstandspaste behält ihre verarbeitbare Konsistenz über eine lange Zeit. Mit ihr läßt sich eine temperaturbeständige, elektrisch stabile und gegen organische Substanzen, wie Dieselkraftstoff, Benzin, Hydrauliköl, widerstandsfähige Widerstandsschicht herstellen.

Es hat sich gezeigt, daß die Feststoffanteile des Bindemittels zu 50% bis 100% aus dem vollveretherten Melaminharz und dem hydroxylgruppenhaltigen Poylesterharz bestehen können. Dabei können 30 bis 50 Gewichtsanteile Melaminharz und 30 bis 10 Gewichtsanteile Polyesterharz vorgesehen sein.

Der gegebenenfalls restliche Feststoffanteil des Bindemittels kann vollständig aus modifiziertem Esterimidharz oder vollständig aus wärmehärtbarem Epoxydharz und/oder Polyurethanharz und/oder Polyacetalharz bestehen. Vorzugsweise wird eine Mischung aus 20 Gewichtsanteilen modifiziertes Esterimidharz und 30 Gewichtsanteilen der genannten anderen Harze verwendet. Der Feststoffanteil des Bindemittels besteht dann aus:
40 Gewichtsanteilen vollverethertes Melaminharz,
20 Gewichtsanteilen hydroxylgruppenhaltiges Polyesterharz,
20 Gewichtsanteilen modifiziertes Esterimidharz,
30 Gewichtsanteilen sonstige Harze.

Der Anteil des Katalysators wird entsprechend der gewünschten Aushärtezeit und Aushärtetemperatur gewählt. Vergleichsweise wenig Katalysator wird eingesetzt, wenn eine hohe Aushärtetemperatur, beispielsweise 230°C bei kurzer Aushärtezeit, beispielsweise 30 Minuten, gewünscht ist. Vergleichsweise mehr Katalysator wird eingesetzt, wenn eine niedrige Aushärtetemperatur, beispielsweise 130°C bei langer Aushärtezeit, beispielsweise 12 h, gewünscht ist.

Die Widerstandspaste wird, beispielsweise bei 4°C gelagert. Sie steht dabei über einige Jahre in verarbeitbarer Konsistenz zur Verfügung. Vor der Verarbeitung kann die Viskosität der Widerstandspaste auf die Bedingungen der vorgesehenen Verarbeitung, beispielsweise Siebdruck, durch Zugabe von Lösungsmittel, wie Butylglykol eingestellt werden. Danach kann ein Substrat im Siebdruck beschichtet werden. Diese Beschichtung kann mit Widerstandspasten unterschiedlicher spezifischer Flächenwiderstände bei entsprechender Zwischentrocknung auch in mehreren Schichten erfolgen. Anschließend erfolgt dann die Aushärtung.

## Patentansprüche

1. Widerstandspaste aus polymerem Bindemittel mit eindispergierten, elektrisch leitfähigen Partikeln, Lösungsmitteln und Additiven,
dadurch gekennzeichnet,
daß 50 - 100% des Feststoffanteiles des polymeren Bindemittels besteht aus einer Mischung von:
a) vollverethertem Melaminharz,
b) hydroxylgruppenhaltigem Polyesterharz
und
c) einem sauren, Protonen freisetzenden Katalysator.

2. Widerstandspaste nach Anspruch 1,
dadurch gekennzeichnet,
daß der saure, Protonen freisetzende Katalysator ein nichtionogen blockierter Katalysator ist.

3. Widerstandspaste nach Anspruch 1 oder 2,
dadurch gekennzeichnet,
daß die elektrisch leitfähigen Partikel einen pH-Wert zwischen 6,5 bis 8 aufweisen.

4. Widerstandspaste nach einem der vorhergehenden Ansprüche,
dadurch gekennzeichnet,
daß die Mischung 30 bis 50 Gewichtsanteile vollverethertes Melaminharz, 10 bis 30 Gewichtsanteile hydroxylgruppenhaltiges Polyesterharz und 0,5 bis 5 Gewichtsanteile sauren Katalysator enthält.

5. Widerstandspaste nach Anspruch 4,
dadurch gekennzeichnet,
daß die Mischung 40 Gewichtsanteile vollverethertes Melaminharz, 20 Gewichtsanteile hydroxylgruppenhaltiges Polyesterharz und ein Gewichtsanteil sauren Katalysator enthält.

6. Widerstandspaste nach einem der vorhergehenden Ansprüche,
dadurch gekennzeichnet,
daß das Bindemittel zusätzlich zu der Mischung ein modifiziertes Esterimidharz enthält.

7. Widerstandspaste nach Anspruch 6,
dadurch gekennzeichnet,
daß bis zu 50% des Feststoffanteiles des polymeren Bindemittels aus modifiziertem Esterimidharz bestehen.

8. Widerstandspaste nach Anspruch 7,
dadurch gekennzeichnet,
daß das Bindemittel etwa 20 Gewichtsanteile modifiziertes Esterimidharz enthält.

9. Widerstandspaste nach einem der vorhergehenden Ansprüche,
dadurch gekennzeichnet,
daß das Bindemittel wärmehärtbares Epoxydharz und/oder Polyurethanharz und/oder Polyacetalharz enthält.

10. Widerstandsschicht aus einer Widerstandspaste nach einem der vorhergehenden Ansprüche,
dadurch gekennzeichnet,
daß ihr Bindemittelanteil zu 50 - 100% aus Melaminharz und Polyesterharz besteht.

11. Widerstandsschicht nach Anspruch 10,
dadurch gekennzeichnet,
daß ihr Bindemittel bis zu 50% Esterimidharz enthält.

## Claims

1. Resistance paste comprising polymeric bonding agent with dispersed electrically conductive particles, solvents and additives,
characterised in that
50 - 100% of the solid content of the polymeric bonding agent comprises a mixture of:
a) fully etherified melamine resin
b) hydroxyl group-containing polyester resin
and
c) an acid proton-releasing catalyst.

2. Resistance paste according to claim 1,
characterised in that
the acid proton-releasing catalyst is a non-ionogenic blocked catalyst.

3. Resistance paste according to claim 1 or 2,
characterised in that
the electrically conductive particles have a pH value between 6.5 and 8.

4. Resistance paste according to one of the preceding claims,
characterised in that
the mixture contains 30 to 50% parts by weight of fully etherified melamine resin, 10 to 30% parts by weight of hydroxyl group-containing polyester resin and 0.5 to 5% parts by weight of acid catalyst.

5. Resistance paste according to claim 4,
characterised in that
the mixture contains 40% parts by weight of fully etherified melamine resin, 20 % by weight hydroxyl group-containing polyester resin and a proportion by weight of acid catalyst.

6. Resistance paste according to one of the preceding claims,
characterised in that
the bonding agent contains a modified esterimide resin additional to the mixture.

7. Resistance paste according to claim 6,
characterised in that
up to 50% of the solid content of the polymeric bonding agent comprises modified esterimide resin.

8. Resistance paste according to claim 7,
characterised in that
the bonding agent contains about 20 parts by weight of modified esterimide resin.

9. Resistance paste according to one of the preceding claims,
characterised in that
the bonding agent contains heat-hardenable epoxy resin and/or polyurethane resin and/or polyacetal resin.

10. Resistance layer comprising a resistance paste according to one of the preceding claims,
characterised in that
its bonding agent content comprises up to 50 to 100% melamine resin and polyester resin.

11. Resistance layer according to claim 10,
characterised in that
its bonding agent contains up to 50% esterimide resin.

## Revendications

1. Pâte résistive formée d'un liant polymère auquel sont incorporés, en dispersion, des particules électriquement conductrices, des solvants et des additifs, pâte caractérisée en ce qu'une proportion de 50 à 100 % de la partie solide du liant polymère consiste en un mélange de
a) une résine de mélamine entièrement éthérifiée,
b) une résine de polyester contenant des groupes hydroxyles, et
c) un catalyseur acide libérant des protons.

2. Pâte résistive selon la revendication 1, caractérisée en ce que le catalyseur acide libérant des protons est un catalyseur bloqué non ionogène.

3. Pâte résistive selon la revendication 1 ou 2, caractérisée en ce que les particules électriquement conductrices présentent une valeur de pH comprise entre 6,5 et 8.

4. Pâte résistive selon l'une des revendications précédentes, caractérisée en ce que le mélange contient 30 à 50 parties en poids de résine de mélamine entièrement éthérifiée, 10 à 30 parties en poids d'une résine de polyester contenant des groupes hydroxyles et 0,5 à 5 parties en poids d'un catalyseur acide.

5. Pâte résistive selon la revendication 4, caractérisé en ce que le mélange contient 40 parties en poids de résine de mélamine entièrement éthérifiée, 20 parties en poids de résine de polyester contenant des groupes hydroxyles et une partie en poids du catalyseur acide.

6. Pâte résistive selon l'une des revendications précédentes, caractérisée en ce que le liant contient, en plus du mélange, une résine d'ester imide modifié.

7. Pâte résistive selon la revendication 6, caractérisée en ce qu'une proportion pouvant aller jusqu'à 50 % de la partie solide du liant polymère consiste en de la résine d'ester imide modifié.

8. Pâte résistive selon la revendication 7, caractérisée en ce que le liant contient environ 20 parties en poids de résine d'ester imide modifié.

9. Pâte résistive selon l'une des revendications précédentes, caractérisée en ce que le liant contient de la résine époxyde thermodurcissable et/ou de la résine de polyuréthanne et/ou de la résine de polyacétal.

10. Couche résistive en une pâte résistive selon l'une des revendications précédentes, caractérisée en ce que son liant consiste pour 50 à 100 % en de la résine de mélamine et de la résine de polyester.

11. Couche résistive selon la revendication 10, caractérisée en ce que son liant contient jusqu'à 50 % de résine d'ester imide.
